# EUROPEAN PATENT SPECIFICATION

(11) **EP 4 105 127 B1**
(45) Date of publication and mention of the grant of the patent: **14.05.2025**
(21) Application number: 22177660.2
(22) Date of filing: 07.06.2022
(51) Int. Cl.: B64D 25/14, B63C 9/04, B64B 1/62

(54) **AUTOMATIC READINESS INDICATION FOR AIRCRAFT EMERGENCY EVACUATION**
AUTOMATISCHE BEREITSCHAFTSANZEIGE FÜR DIE NOTFALLEVAKUIERUNG VON FLUGZEUGEN
INDICATION AUTOMATIQUE DE L'ÉTAT DE PRÉPARATION POUR L'ÉVACUATION D'URGENCE D'UN AÉRONEF

(30) Priority: 16.06.2021 IN 202141026859; 05.04.2022 US 202217713479
(43) Date of publication of application: 21.12.2022
(73) Proprietor: Goodrich Corporation, Charlotte, NC 28217-4578 (US)
(72) Inventor: PALANIAPPAN, Elangovan, 560049 Bangalore, KA (IN); JOHN, Poly, 560048 Bangalore (IN); SALDANHA, Nikhil Anthony, 560005 Bangalore, Karnataka (IN); SUBRAMANIAN, Petchi, 560066 Bangalore, KA (IN)
(74) Representative: Dehns

(56) References cited:
- EP-A1- 1 970 223
- US-A1- 2006 090 835
- US-B1- 8 533 879
- US-B2- 10 351 251

## Description

### CROSS-REFERENCE TO RELATED APPLICATIONS

This application claims priority to, and the benefit of, India Patent Application No. 202141026859, filed June 16, 2021 and titled "AUTOMATIC READINESS INDICATION FOR AIRCRAFT EMERGENCY EVACUATION".

### FIELD

The present disclosure relates generally to inflatable evacuation systems and, more particularly, to systems used to provide an indication readiness or sufficient inflation of such inflatable evacuation systems for use by passengers or crew.

### BACKGROUND

Inflatable evacuation systems may be found on various structures, including aircraft, boats, offshore drilling platforms and the like. The systems are typically equipped with an inflatable or an inflatable device, such as, for example, an inflatable slide or an inflatable raft, configured to facilitate rapid evacuation of persons in the event of an emergency. Such inflatables are typically stored in an uninflated condition on the structure in a location readily accessible for deployment. For example, an evacuation slide for a commercial aircraft is stored in an uninflated condition in a case or compartment located proximate an emergency exit.

Systems used to inflate evacuation slides typically employ a gas stored within a cylinder or tank at high pressure, which is discharged into the evacuation slide (or into an inflatable tube comprised within the evacuation slide) within a specific time period. This may be accomplished, for example, by opening a main inflation valve that connects the high-pressure gas to the inflatable tube. Since fast inflation times for an evacuation slide or raft are important, most inflation systems will have excess gas in the storage cylinder or tank to ensure complete inflation and to adjust for variations in ambient temperature and gas supply lines. An evacuation slide is also typically provided with one or more pressure relief valves to vent the excess gas after the evacuation slide or inflatable tube is charged to the set pressure of the pressure relief valve.

During an emergency or similar event, the evacuation slide is typically deployed in response to an action taken by a passenger or a crew member. Upon deployment, the high-pressure gas is forced into the evacuation slide or the inflatable tube, causing inflation of the slide to occur. While inflatable evacuation systems are configured for fast inflation times, situations may occur where inflation takes more time than expected or the evacuation slide remains underinflated upon expiration of the high-pressure gas source. In such situations, it may be undesirable for passengers or crew members to board the evacuation slide, particularly where the device is currently undergoing inflation or assumes an underinflated state of readiness following inflation.

EP 1 970 223 A1 describes a battery powered tyre pressure sensor system with a high sensitivity stretch sensor assembly. Other prior art systems are known from US 10 351 251 B2, which describes an inflatable flotation device with a speaker generating a signal that it is ready to be used, and from US 2006/090835 A1, which describes a tyre parameter measuring device comprising a pressure sensor and a temperature sensor fixed to or integrated in a substrate.

### SUMMARY

An inflation system for an inflatable is disclosed. The inflation sensor system includes a readiness indicator module; a stretch sensor configured for mounting to the inflatable and to provide a real-time stretch data of an elastic deformation of the inflatable; and a controller configured to receive the real-time stretch data and to transmit a control signal to the readiness indicator module to indicate a deployed status of the inflatable.

The system also includes a temperature sensor configured for mounting to the inflatable and to provide a real-time temperature data of the inflatable. In various embodiments, the controller includes a stretch-temperature database configured to compensate the real-time stretch data based on the real-time temperature data and to generate a compensated stretch signal. In various embodiments, the controller is configured to compare the compensated stretch signal against a cutoff pressure value and to activate the readiness indicator module once the compensated stretch signal indicates a pressure within the inflatable exceeds the cutoff pressure value. In various embodiments, the readiness indicator module includes a light source or an audio source.

In various embodiments, the controller is configured to compare the compensated stretch signal against the cutoff pressure value and to stop a flow of a pressurized gas to the inflatable if the compensated stretch signal indicates the pressure within the inflatable exceeds the cutoff pressure value. In various embodiments, the controller is configured to compare the compensated stretch signal against a cutoff stretch value and to stop a flow of a pressurized gas to the inflatable if the compensated stretch signal exceeds the cutoff stretch value.

An evacuation system for an aircraft is disclosed. The evacuation system includes an inflatable tube; a source of a pressurized gas; a valve module connected to the source of the pressurized gas and configured to control a flow of the pressurized gas to the inflatable tube, and an inflation sensor system as described above, wherein the controller is configured to transmit a control signal to the valve module to control the flow of the pressurized gas to the inflatable tube and to the readiness indicator module to indicate a deployed status of the inflatable tube. In various embodiments, the readiness indicator module includes a light source or an audio source. In various embodiments, the readiness indicator module is mounted on an exit door of the aircraft.

In various embodiments, the controller includes a stretch-temperature database configured to compensate the real-time stretch data based on the real-time temperature data and to generate a compensated stretch signal. In various embodiments, the controller is configured to compare the compensated stretch signal against a cutoff pressure value and to activate the readiness indicator module once the compensated stretch signal indicates a pressure within the inflatable tube exceeds the cutoff pressure value.

In various embodiments, the valve module includes a main pneumatic valve configured to start and to stop the flow of the pressurized gas. In various embodiments, the valve module includes a normally closed control valve connected to the controller and configured to operate the main pneumatic valve. In various embodiments, the controller is configured to compare the compensated stretch signal against a cutoff pressure value and to stop the flow of the pressurized gas to the inflatable tube if the compensated stretch signal indicates a pressure within the inflatable tube is greater than the cutoff pressure value. In various embodiments, the controller is configured to compare the compensated stretch signal against the cutoff pressure value and to start the flow of the pressurized gas to the inflatable tube if the compensated stretch signal indicates the pressure within the inflatable tube is less than the cutoff pressure value. In various embodiments, the controller is configured to compare the compensated stretch signal against a cutoff stretch value and to stop the flow of the pressurized gas to the inflatable tube if the compensated stretch signal exceeds the cutoff stretch value.

A method for controlling inflation of an inflatable is disclosed. In various embodiments, the method includes the steps of opening a valve module connected to a source of a pressurized gas and configured to control a flow of the pressurized gas to the inflatable; monitoring a stretch sensor mounted to the inflatable to provide a real-time stretch data of an elastic deformation of the inflatable; monitoring a temperature sensor mounted to the inflatable to provide a real-time temperature data of the inflatable; generating a compensated stretch signal based on a comparison of the real-time stretch data and the real-time temperature data against a thermal compensation database; and activating a readiness indicator module based on the compensated stretch signal having reached a threshold value indicating a deployed state of the inflatable. In various embodiments, the readiness indicator module includes a light source or an audio source.

The foregoing features and elements may be combined in any combination, without exclusivity, unless expressly indicated herein otherwise, to the extent that they fall within the claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 is a schematic view of an evacuation slide coupled to an aircraft, in accordance with various embodiments;
FIG. 2 is schematic view of an inflation control system, in accordance with various embodiments;
FIGS. 3A and 3B are schematic views of a stretch sensor for an evacuation slide, in accordance with various embodiments;
FIG. 4 is schematic view of an inflation control system having a readiness indicator system incorporated therein, in accordance with various embodiments; and
FIG. 5 is a flowchart describing various steps employed during inflation of an inflatable or an evacuation slide, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

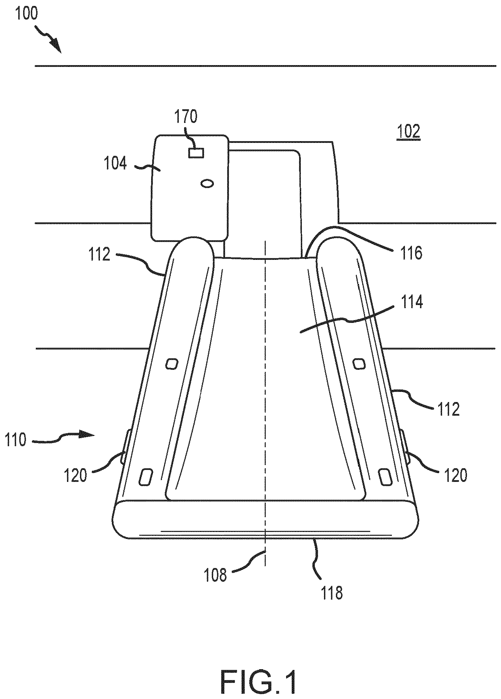

Referring to FIG. 1, an aircraft 100 having an evacuation slide 110 is illustrated, in accordance with various embodiments. The aircraft 100 may include a fuselage 102 with wings fixed to the fuselage 102. An emergency exit door 104 may be disposed on the fuselage 102 over one of the wings or at some other location along a length of the fuselage 102. As described further below, in various embodiments, a readiness indicator module 170 is mounted on the emergency exit door 104 and configured to provide a readiness indicator (e.g., via a light signal or an audio signal or both) during an inflation process once the evacuation slide is completely or otherwise safely deployed. The evacuation slide 110 and other components of an evacuation system may be housed within a pack-board housing or other compartment mounted to the aircraft 100. The evacuation system may jettison a blowout panel to deploy the evacuation slide 110, such as, for example, an inflatable evacuation slide, in response to the emergency exit door 104 opening or in response to another evacuation event. FIG. 1 schematically depicts the evacuation slide 110 in a deployed state, extending from the fuselage 102 of the aircraft 100. During deployment, an inflatable tube 112 (or a plurality of inflatable tubes) is inflated using an inflation system that is typically configured to deliver a pressurized gas to the inflatable tube 112. The evacuation slide 110 may comprise a sliding surface 114 secured to the inflatable tube 112 and configured for sliding passenger egress from the emergency exit door 104 of the aircraft 100 to a surface on the ground in the event of an evacuation on land or to a water surface in the event of an evacuation on a lake, river or ocean. In various embodiments, the evacuation slide 110 includes a longitudinal axis 108 that extends from a first or a proximal end 116 (or a head portion) to a second or a distal end 118 (or a foot portion). As described further below, in various embodiments, the evacuation slide 110 may comprise a stretch sensor 120 (or a plurality of stretch sensors) disposed on the inflatable tube 112 (or on each inflatable tube comprised within the evacuation slide 110).

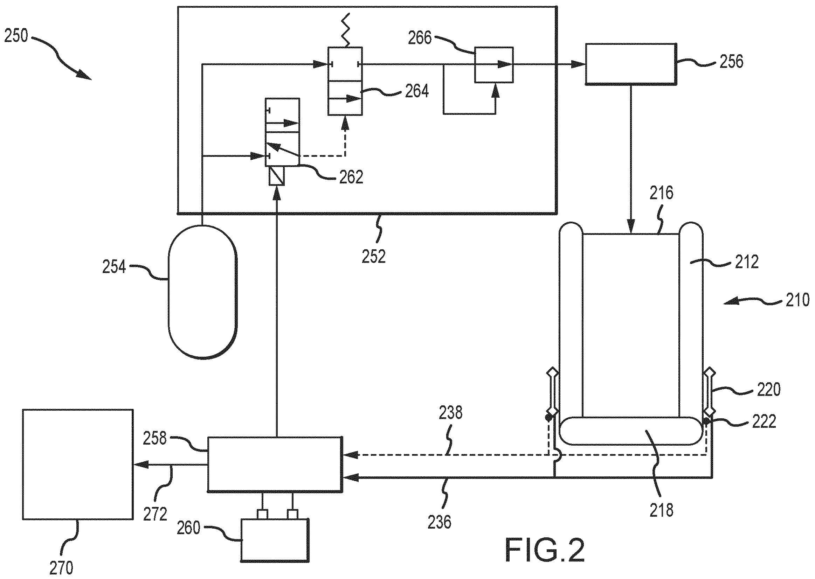

Referring now to FIG. 2, an inflation control system 250 coupled to an inflatable, such as, for example, an evacuation slide 210 that is similar to the evacuation slide 110 described above, is illustrated. While the disclosure provided herein focuses on inflation of evacuation slides, it will be appreciated the inflation control system 250 may be applied to other inflatables, such as, for example, life-rafts or balloons or the like. Similar to the description above, the evacuation slide 210 may include an inflatable tube 212 and a proximal end 216 (or a head portion) configured for attachment to a structure, such as, for example, an aircraft, and a distal end 218 (or a foot portion) spaced a length of the evacuation slide 210 from the proximal end 216. At least one stretch sensor 220 (two being shown in Figure 2) is mounted on the inflatable tube 212 and is configured to sense or monitor an elastic stretch or an elastic deformation of the fabric comprising the inflatable tube 212 during an inflation process. At least one temperature sensor 222 (two being shown in Figure 2) is also mounted on the inflatable tube 212 and is configured to sense or monitor the temperature of the inflatable tube 212 (or the ambient temperature surrounding the inflatable tube 212) during the inflation process. Real-time data concerning the temperature of the inflatable tube 212 (or a real-time temperature data) and the elastic stretch experienced by the inflatable tube 212 (or a real-time stretch data) during the inflation process may then be used to determine the pressure within the inflatable tube 212 on a real-time basis during the inflation process. As described further below, the real-time temperature data and the real-time stretch data may likewise be used to determine an inflation status or readiness status of the inflatable tube 212 or the evacuation slide 210.

Still referring to FIG. 2, the inflation control system 250 includes a valve module 252, a storage vessel 254 filled with a high-pressure gas (or, in various embodiments, a gas generator configured to generate a high-pressure gas), an aspirator 256, a controller 258 and a power source 260, such as, for example, a battery or charged capacitor. In various embodiments, the power source 260 is a dedicated source configured to power the stretch sensor 220 and the temperature sensor 222 mounted on the inflatable tube 212, as well as each of the valve module 252 and the controller 258. To provide a dedicated source of direct current power, the power source 260 may comprise, for example, a lithium-ion battery or an ultracapacitor, each configured to store energy at a high density for controlling the rapid sequence of events that occur during an inflation process of the evacuation slide 210. As illustrated in FIG. 2, real-time data from the stretch sensor 220 is transmitted to the controller 258 via a stretch sensor bus 236, while real-time data from the temperature sensor 222 is transmitted to the controller via a temperature sensor bus 238. In various embodiments, the controller 258 may include a general-purpose processor, a digital signal processor (DSP), an application specific integrated circuit (ASIC), a field programmable gate array (FPGA) or some other programmable logic device, discrete gate or transistor logic, discrete hardware components, or any combination thereof. As described further below, in various embodiments, a readiness indicator module 270 is configured to receive an output signal from the controller 258 via an output signal bus 272 and to provide a readiness indicator (e.g., via a light signal or an audio signal or both) during an inflation process once the evacuation slide 210 is completely or otherwise safely deployed. The disclosure contemplates the output signal bus 272, in various embodiments, to comprise a hard-wired bus (e.g., a copper-wired bus) or a wireless bus (e.g., a wireless communication link based on infrared, radio frequency, Zigbee, WiFi, etc.).

In further detail, the valve module 252 is configured to open and close a main pneumatic valve 264 based on a control signal received from the controller 258. More specifically, based on preset control logic (that is typically specific to the materials used to construct a particular inflatable) and the real-time data received from the stretch sensor 220 and the temperature sensor 222, the controller 258 opens or closes the main pneumatic valve 264 in order to turn on or turn off the flow of high-pressure gas from the storage vessel 254, to the aspirator 256 and then to the inflatable tube 212 of the evacuation slide 210. In various embodiments, the valve module 252 may further comprise a normally closed control valve 262, such as, for example, a three-way, two-position normally closed control valve configured to operate the main pneumatic valve 264 between an open position and a closed position. In various embodiments, the valve module 252 may also include a pressure regulator valve 266 configured to prevent the occurrence of an over-pressure situation at the aspirator 256 or the inflatable tube 212.

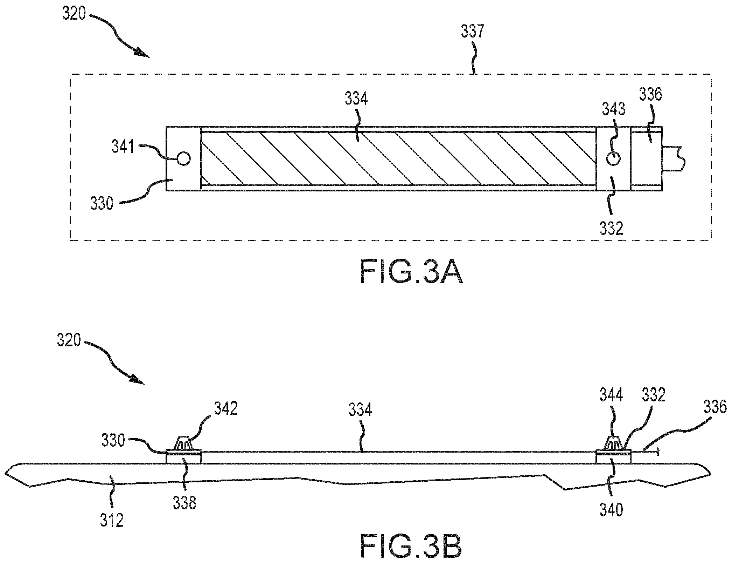

Referring now to FIGS. 3A and 3B, a stretch sensor 320, similar to the stretch sensor 220 described above with reference to FIG. 2, is illustrated. The stretch sensor 320 includes a sensing material 334, which may be either capacitance-based or resistance-based. For example, in various embodiments, the sensing material 334 comprises a capacitance-based material. Such capacitance-based stretch sensors exhibit minimal hysteresis during cyclic and creep tests and behave similar to a flexible parallel plate capacitor, comprising two conductive electrodes separated by a di-electric. When the stretch sensor 320 is stretched, its capacitance increases proportionate to the amount of stretch to which it is subjected. The stretch sensor 320 includes a first mounting tab 330 and a second mounting tab 332, between which the sensing material 334 is disposed. In various embodiments, the first mounting tab 330 is attached to an inflatable tube 312 (similar to the inflatable tube 212 described above) via a first adhesive backing member 338. Similarly, the second mounting tab 332 is attached to the inflatable tube 312 via a second adhesive backing member 340. In various embodiments, the first mounting tab 330 includes a first aperture 341 configured to engage a first standoff pin 342 extending from the first adhesive backing member 338 and the second mounting tab 332 includes a second aperture 343 configured to engage a second standoff pin 344 extending from the second adhesive backing member 340. A stretch sensor bus 336 (similar to the stretch sensor bus 236 described above) is connected to the sensing material 334 and configured to receive power from and to transmit real-time sensor data to a controller, such as the controller 258 described above. As the two mounting tabs move apart from one another as a result of the inflatable tube 312 being elastically deformed, the sensing material 334 will stretch and generate an electrical signal (or control signal) proportional to the degree of stretch, with the electrical signal transmitted to the controller via the stretch sensor bus 336. In various embodiments, the elasticity of the sensing material 334 will generally be greater than the elasticity of the inflatable tube 312, so as not to provide interference or resistance against the elastic deformation of the inflatable tube 312.

In various embodiments, the stretch sensor 320, when coupled to the inflatable tube 312, is covered by a pouch 337 that may also be adhered to the inflatable tube 312. The pouch 337 protects the stretch sensor 320 from harsh environments, such as, for example, saltwater. As described above, in various embodiments, the stretch sensor 320 is mounted to the inflatable tube 312 using the first standoff pin 342 and the second standoff pin 344. However, in various embodiments, the first mounting tab 330 and the second mounting tab 332 may be bonded directly to the fabric of the inflatable tube 312. Regardless of the manner of mounting, in various embodiments, the stretch sensor 320 may be mounted to the inflatable tube 312 with a slight amount of pre-stretch to account for manufacturing tolerances between the mounting tabs. The nominal output of the stretch sensor 320 may then be reset to zero or offset-corrected during a calibration process with an inflation control system, such as, for example, the inflation control system 250 described above.

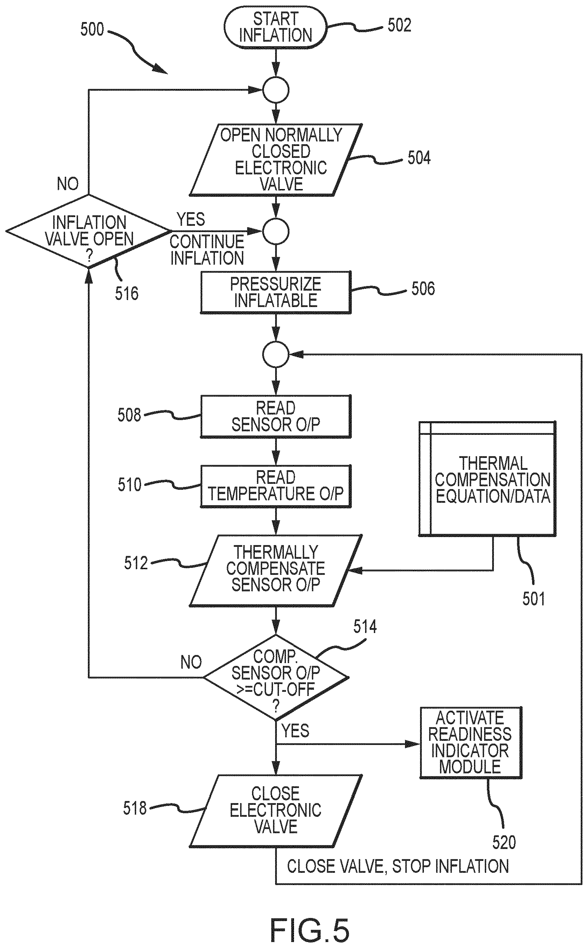

During a calibration process, the stretch sensor 320 is calibrated to establish a functional relationship between a degree of stretch and a degree of electrical output or signal strength reflective of the degree of stretch. The calibration is performed over a range of temperatures likely to be encountered during an inflation process. Based on the calibration process, a stretch-temperature database (or a thermal compensation database) is developed and embedded into the controller. The stretch-temperature database will generally include information defining a relationship between the degree of stretch provided by the stretch sensor 320 as a function of temperature sensed by the temperature sensor. In other words, the stretch-temperature database will enable the controller to determine a value of pressure within the inflatable tube 312 based on two values - the degree of stretch reported by the stretch sensor 320 and the temperature of either the inflatable tube 312 or the ambient temperature surrounding the inflatable tube 312. In various embodiments, the stretch-temperature database will include a cutoff pressure value that is equivalent or approximately equivalent to a pressure relief value used in pressure relief valves attached to currently used systems, thereby obviating the need to incorporate pressure relief valves into the inflatable tube 312. As described further below with reference to FIG. 5, rather than a cutoff pressure value, the stretch-temperature database may include a cutoff stretch value that may provide a more direct comparison against the degree of stretch reported by the stretch sensor 320. Generally speaking, the cutoff pressure value and the cutoff stretch value will be indicative of equivalent levels of pressure within the inflatable tube 312.

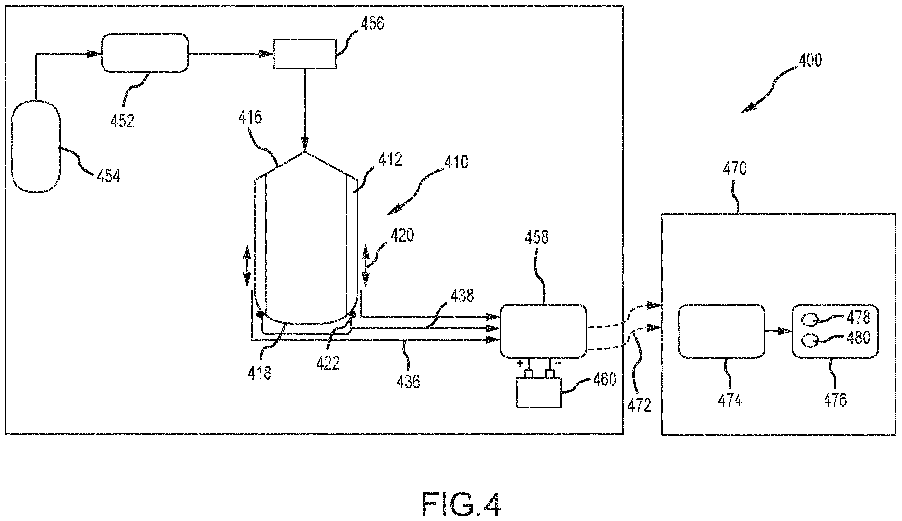

Referring now to FIG. 4, an inflation readiness system 400 is illustrated, in accordance with various embodiments. The inflation readiness system 400 is coupled to an inflatable, such as, for example, an evacuation slide 410 that is similar to the evacuation slide 210 described above. Similar to the description above, the evacuation slide 410 may include an inflatable tube 412 and a proximal end 416 (or a head portion) configured for attachment to a structure, such as, for example, an aircraft, and a distal end 418 (or a foot portion) spaced a length of the evacuation slide 410 from the proximal end 416. At least one stretch sensor 420 is mounted on the inflatable tube 412 and, as described above, is configured to sense or monitor an elastic stretch or an elastic deformation of the fabric comprising the inflatable tube 412 during an inflation process. At least one temperature sensor 422 is also mounted on the inflatable tube 412 and, as also described above, is configured to sense or monitor the temperature of the inflatable tube 412 (or the ambient temperature surrounding the inflatable tube 412) during the inflation process. Real-time data concerning the temperature of the inflatable tube 412 (or a real-time temperature data) and the elastic stretch experienced by the inflatable tube 412 (or a real-time stretch data) during the inflation process may then be used to determine the pressure within the inflatable tube 412 on a real-time basis during the inflation process. The real-time temperature data and the real-time stretch data is also used to determine an inflation status or readiness status of the inflatable tube 412 or the evacuation slide 410.

Still referring to FIG. 4, the inflation readiness system 400 is incorporated into a system comprising a valve module 452, a storage vessel 454 filled with a high-pressure gas (or, in various embodiments, a gas generator configured to generate a high-pressure gas), an aspirator 456, a controller 458 and a power source 460, such as, for example, a battery or charged capacitor. Each of the valve module 452, the storage vessel 454, the aspirator 456, the controller 458 and the power source 460 is similar to the valve module 252, the storage vessel 254, the aspirator 256, the controller 258 and the power source 260 described above with reference to FIG. 2. In operation, a real time data from the stretch sensor 420 is transmitted to the controller 458 via a stretch sensor bus 436, while a real-time data from the temperature sensor 422 is transmitted to the controller 458 via a temperature sensor bus 438. In various embodiments, the controller 458 may include a general-purpose processor, a digital signal processor (DSP), an application specific integrated circuit (ASIC), a field programmable gate array (FPGA) or some other programmable logic device, discrete gate or transistor logic, discrete hardware components, or any combination thereof.

During an inflation process, and once the evacuation slide 410 is completely or otherwise safely deployed, an output signal from the controller 458 is provided to a readiness indicator module 470 via an output signal bus 472. The disclosure contemplates the output signal bus 472, in various embodiments, to comprise a hard-wired bus (e.g., a copper-wired bus) or a wireless bus (e.g., a wireless communication link based on infrared, radio frequency, Zigbee, WiFi, etc.). The readiness indicator module 470 is typically positioned on or in the vicinity of an emergency exit door of an aircraft, such as, for example, the emergency exit door 104 described above with reference to FIG. 1. In various embodiments, the readiness indicator module 470 includes a receiver circuit 474 and a readiness indicator 476. The readiness indicator 476 may include, for example, a visual indicator 478 (e.g., a light source) or an audio indicator 480 (e.g., an audio source). As described in further detail below with reference to FIG. 5, as the evacuation slide 410 is being inflated, the real-time stretch data and the real-time temperature data is used to control inflation of the evacuation slide 410 and is also used to monitor readiness of the inflatable slide 410 for use. Once the controller 458 determines the evacuation slide 410 is completely or otherwise safely deployed, the output signal from the controller 458 is provided to a readiness indicator module 470 and either the visual indicator 478 or the audio indicator 480 or both are activated.

Referring now to FIG. 5, a flowchart 500 describing a method for controlling inflation of an inflatable or an evacuation slide is provided. In describing the various steps, reference is made to the components of the inflation control system 250 described above with reference to FIG. 2 and the inflation readiness system 400 described above with reference to FIG. 4. In a first step 502, a decision to inflate the evacuation slide 210 (or the evacuation slide 410) is made and reported to the controller 258 (or the controller 458). At a second step 504, the controller 258 transmits a control signal to the valve module 252 to open the main pneumatic valve 264. In various embodiments, opening the main pneumatic valve 264 is accomplished by activating the normally closed control valve 262. Following opening the main pneumatic valve 264, the evacuation slide 210 begins pressurization at a third step 506. At a fourth step 508 and a fifth step 510, the controller 258 reads real-time data from the stretch sensor 220 and the temperature sensor 222. The real-time data from the stretch sensor 220 and the temperature sensor 222 is then compared against a stretch-temperature database (or a thermal compensation database 501) and compensated to provide a compensated stretch signal according to the temperature reported by the temperature sensor 222 at a sixth step 512.

At a seventh step 514, the compensated stretch signal is compared against a cutoff pressure value (*e.g.*, the cutoff pressure value that is equivalent or approximately equivalent to the pressure relief value used in current systems). If the compensated stretch signal indicates a pressure within the inflatable tube 212 is less than or equal to the cutoff pressure value, then the controller 258 performs a query at an eighth step 516 to determine the status of the main pneumatic valve. If the main pneumatic valve 264 is open, then the controller 258 continues pressurization of the inflatable tube 212 using the current configuration, or, if the main pneumatic valve 268 is closed, then the controller 258 returns to the second step 504, where the main pneumatic valve 268 is re-opened and the inflation process continues. Returning to the seventh step 514, if the compensated stretch signal indicates a pressure within the inflatable tube 212 is greater than the cutoff pressure value, then the controller 258 directs the main pneumatic valve 264 to close, thereby halting the flow of pressurized gas to the inflatable tube 212 at a ninth step 518. Likewise, if the compensated stretch signal is less than or equal to a cutoff stretch value, then the controller 258 performs the query at the eighth step 516 and continues operation as described above and if, on the other hand, the compensated stretch signal is greater than the cutoff stretch value, then the controller 258 directs the main pneumatic valve 264 to close, thereby halting the flow of pressurized gas to the inflatable tube 212 at the ninth step 518. Once the compensated stretch signal indicates a pressure within the inflatable tube 212 is greater than the cutoff pressure value (or the cutoff stretch value), then the controller 258 (or the controller 458) also directs the readiness indicator module 270 (or the readiness indicator module 470) to be activated at a tenth step 520.

As illustrated in the flowchart 500, regardless of whether the flow of pressurized gas to the inflatable tube 212 continues or is halted, the monitoring of the stretch sensor 220 and the temperature sensor 222 continues in a cyclic fashion, enabling the controller 258 to open and close the main pneumatic valve 264 in real-time during the inflation process depending on fluctuations of the pressure within the inflatable tube 212. For example, after the main pneumatic valve 264 is closed, if the compensated stretch signal indicates a pressure within the inflatable tube 212 has decreased to less than the cutoff pressure value (or the stretch cutoff value), then the controller 258 opens the main pneumatic valve 264 again to continue the flow or pressurized gas to the inflatable tube 212. Accordingly, the compensated stretch signal becomes a control variable, where the pressure within the inflatable tube 212 (or the stretch value representative of deformation of the inflatable tube 212) is maintained within a tolerance band during the inflation process by actuating and de-actuating the main pneumatic valve 264 for one or more cycles. In such fashion, the main pneumatic valve 264 may be operated in a pulse-width controlled manner to maintain the pressure (or the degree of stretch) within the tolerance band. Note that while the inflation process may continue in the cyclic fashion just described, once the compensated stretch signal first indicates a pressure within the inflatable tube 212 is greater than the cutoff pressure value and the readiness indicator module 270 (or the readiness indicator module 470) has been activated, the readiness indicator module 270 remains in the activated state (i.e., the visual indicator 478 or the audio indicator 480 or both remain activated).

The inflation readiness system described above, in conjunction with the inflation control system, provides a readiness indication status of an evacuation slide in the deployed condition and establishes a confirmed and safe evacuation status at each exit door for passengers disembarking an aircraft during an emergency. The disclosed systems employ flexible stretch sensors bonded to an inflatable tube, typically disposed proximate the foot portion of the inflatable tube. Because the output values of the stretch sensors may vary as a function of ambient temperature, temperature compensation is introduced using temperature sensors. Note the disclosure contemplates stretch and temperature sensors that may be connected to a controller via wired or wireless buses, which, in various embodiments, may comprise a hard-wired bus (e.g., a copper-wired bus) or a wireless bus (e.g., a wireless communication link based on infrared, radio frequency, Zigbee, WiFi, etc.). A readiness indicator within the aircraft, which may also be connected to the controller via wired or wireless buses, may be activated once the controller determines the stretch sensor has reached a threshold value indicative of the evacuation slide having assumed a deployed status (e.g., fully deployed) or otherwise safe condition (e.g., partially deployed but still considered safe).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Although various embodiments have been disclosed and described, one of ordinary skill in this art would recognize that certain modifications would come within the scope of the claims. Accordingly, the description is not intended to be exhaustive or to limit the principles described or illustrated herein to any precise form. Many modifications and variations are possible in light of the above teaching, to the extent that they fall within the scope of the claims.

## Claims

1. An inflation sensor system for an inflatable, comprising:
a readiness indicator module (270);
a stretch sensor (220) configured for mounting to the inflatable and to provide a real-time stretch data of an elastic deformation of the inflatable; and
a controller (258) configured to receive the real-time stretch data and to transmit a control signal to the readiness indicator module to indicate a deployed status of the inflatable; and **characterized by**:
a temperature sensor (222) configured for mounting to the inflatable and to provide a real-time temperature data of the inflatable.

2. The inflation sensor system of claim 1, wherein the controller includes a stretch-temperature database configured to compensate the real-time stretch data based on the real-time temperature data and to generate a compensated stretch signal.

3. The inflation sensor system of claim 2, wherein the controller (258) is configured to compare the compensated stretch signal against a cutoff pressure value and to activate the readiness indicator module once the compensated stretch signal indicates a pressure within the inflatable exceeds the cutoff pressure value.

4. The inflation sensor system of claim 3, wherein the readiness indicator module (270) includes a light source or an audio source; and/or
wherein the controller (258) is configured to compare the compensated stretch signal against the cutoff pressure value and to stop a flow of a pressurized gas to the inflatable if the compensated stretch signal indicates the pressure within the inflatable exceeds the cutoff pressure value; and/or
wherein the controller (258) is configured to compare the compensated stretch signal against a cutoff stretch value and to stop a flow of a pressurized gas to the inflatable if the compensated stretch signal exceeds the cutoff stretch value.

5. An evacuation system for an aircraft, comprising:
an inflatable tube (212);
a source of a pressurized gas;
a valve module (252) connected to the source of the pressurized gas and configured to control a flow of the pressurized gas to the inflatable tube;
an inflation sensor system as claimed in claim 1;
wherein the controller (258) is configured to transmit a control signal to the valve module to control the flow of the pressurized gas to the inflatable tube.

6. The evacuation system of claim 5, wherein the readiness indicator module (270) includes a light source or an audio source, and preferably wherein the readiness indicator module is mountable on an exit door of the aircraft.

7. The evacuation system of claim 6, wherein the controller (258) includes a stretch-temperature database configured to compensate the real-time stretch data based on the real-time temperature data and to generate a compensated stretch signal.

8. The evacuation system of claim 7, wherein the controller (258) is configured to compare the compensated stretch signal against a cutoff pressure value and to activate the readiness indicator module once the compensated stretch signal indicates a pressure within the inflatable tube exceeds the cutoff pressure value.

9. The evacuation system of claim 7, wherein the valve module (252) includes a main pneumatic valve configured to start and to stop the flow of the pressurized gas.

10. The evacuation system of claim 9, wherein the valve module (252) includes a normally closed control valve connected to the controller and configured to operate the main pneumatic valve.

11. The evacuation system of claim 10, wherein the controller (258) is configured to compare the compensated stretch signal against a cutoff pressure value and to stop the flow of the pressurized gas to the inflatable tube if the compensated stretch signal indicates a pressure within the inflatable tube is greater than the cutoff pressure value, and preferably wherein the controller (258) is configured to compare the compensated stretch signal against the cutoff pressure value and to start the flow of the pressurized gas to the inflatable tube if the compensated stretch signal indicates the pressure within the inflatable tube is less than the cutoff pressure value.

12. The evacuation system of claim 10, wherein the controller (258) is configured to compare the compensated stretch signal against a cutoff stretch value and to stop the flow of the pressurized gas to the inflatable tube if the compensated stretch signal exceeds the cutoff stretch value.

13. A method for controlling inflation of an inflatable, comprising:
opening a valve module connected to a source of a pressurized gas and configured to control a flow of the pressurized gas to the inflatable;
monitoring a stretch sensor mounted to the inflatable to provide a real-time stretch data of an elastic deformation of the inflatable;
monitoring a temperature sensor mounted to the inflatable to provide a real-time temperature data of the inflatable;
generating a compensated stretch signal based on a comparison of the real-time stretch data and the real-time temperature data against a thermal compensation database; and
activating a readiness indicator module based on the compensated stretch signal having reached a threshold value indicating a deployed state of the inflatable.

14. The method of claim 13, wherein the readiness indicator module includes a light source or an audio source.

## Patentansprüche

1. Aufblassensorsystem für ein aufblasbares Element, umfassend:
ein Bereitschaftsanzeigemodul (270);
einen Dehnungssensor (220), der dazu konfiguriert ist, an dem aufblasbaren Element montiert zu sein und Echtzeit-Dehnungsdaten einer elastischen Verformung des aufblasbaren Elements bereitzustellen; und
eine Steuerung (258), die dazu konfiguriert ist, die Echtzeit-Dehnungsdaten zu empfangen und ein Steuersignal an das Bereitschaftsanzeigemodul zu senden, um einen Einsatzstatus des aufblasbaren Elements anzuzeigen; und **gekennzeichnet durch**:
einen Temperatursensor (222), der dazu konfiguriert ist, an dem aufblasbaren Element montiert zu sein und Echtzeit-Temperaturdaten des aufblasbaren Elements bereitzustellen.

2. Aufblassensorsystem nach Anspruch 1, wobei die Steuerung eine Dehnungs-Temperatur-Datenbank aufweist, die dazu konfiguriert ist, die Echtzeit-Dehnungsdaten basierend auf den Echtzeit-Temperaturdaten zu kompensieren und ein kompensiertes Dehnungssignal zu erzeugen.

3. Aufblassensorsystem nach Anspruch 2, wobei die Steuerung (258) dazu konfiguriert ist, das kompensierte Dehnungssignal mit einem Abschaltdruckwert zu vergleichen und das Bereitschaftsanzeigemodul zu aktivieren, sobald das kompensierte Dehnungssignal anzeigt, dass ein Druck innerhalb des aufblasbaren Elements den Abschaltdruckwert überschreitet.

4. Aufblassensorsystem nach Anspruch 3, wobei das Bereitschaftsanzeigemodul (270) eine Lichtquelle oder eine Audioquelle aufweist; und/oder
wobei die Steuerung (258) dazu konfiguriert ist, das kompensierte Dehnungssignal mit dem Abschaltdruckwert zu vergleichen und einen Strom eines unter Druck stehenden Gases zu dem aufblasbaren Element zu stoppen, wenn das kompensierte Dehnungssignal anzeigt, dass der Druck innerhalb des aufblasbaren Elements den Abschaltdruckwert überschreitet; und/oder
wobei die Steuerung (258) dazu konfiguriert ist, das kompensierte Dehnungssignal mit einem Abschaltdehnungswert zu vergleichen und einen Strom eines unter Druck stehenden Gases zu dem aufblasbaren Element zu stoppen, wenn das kompensierte Dehnungssignal den Abschaltdehnungswert überschreitet.

5. Evakuierungssystem für ein Flugzeug, umfassend:
einen aufblasbaren Schlauch (212); und
eine Quelle eines unter Druck stehenden Gases;
ein Ventilmodul (252), das mit der Quelle des unter Druck stehenden Gases verbunden und dazu konfiguriert ist, einen Strom des unter Druck stehenden Gases zu dem aufblasbaren Element zu steuern;
ein Aufblassensorsystem nach Anspruch 1;
wobei die Steuerung (258) dazu konfiguriert ist, ein Steuersignal an das Ventilmodul zu senden, um den Strom des unter Druck stehenden Gases zu dem aufblasbaren Schlauch zu steuern.

6. Evakuierungssystem nach Anspruch 5, wobei das Bereitschaftsanzeigemodul (270) eine Lichtquelle oder eine Audioquelle aufweist und wobei das Bereitschaftsanzeigemodul vorzugsweise an einer Ausgangstür des Flugzeugs montierbar ist.

7. Evakuierungssystem nach Anspruch 6, wobei die Steuerung eine Dehnungs-Temperatur-Datenbank aufweist, die dazu konfiguriert ist, die Echtzeit-Dehnungsdaten basierend auf den Echtzeit-Temperaturdaten zu kompensieren und ein kompensiertes Dehnungssignal zu erzeugen.

8. Evakuierungssystem nach Anspruch 7, wobei die Steuerung (258) dazu konfiguriert ist, das kompensierte Dehnungssignal mit einem Abschaltdruckwert zu vergleichen und das Bereitschaftsanzeigemodul zu aktivieren, sobald das kompensierte Dehnungssignal anzeigt, dass ein Druck innerhalb des aufblasbaren Schlauchs den Abschaltdruckwert überschreitet.

9. Evakuierungssystem nach Anspruch 7, wobei das Ventilmodul ein pneumatisches Hauptventil aufweist, das dazu konfiguriert ist, den Strom des unter Druck stehenden Gases zu starten und zu stoppen.

10. Evakuierungssystem nach Anspruch 9, wobei das Ventilmodul (252) ein normalerweise geschlossenes Steuerventil aufweist, das mit der Steuerung verbunden und dazu konfiguriert ist, das pneumatische Hauptventil zu betätigen.

11. Evakuierungssystem nach Anspruch 10, wobei die Steuerung (258) dazu konfiguriert ist, das kompensierte Dehnungssignal mit einem Abschaltdruckwert zu vergleichen und den Strom des unter Druck stehenden Gases zu dem aufblasbaren Schlauch zu stoppen, wenn das kompensierte Dehnungssignal anzeigt, dass ein Druck innerhalb des aufblasbaren Schlauchs größer als der Abschaltdruckwert ist, und wobei vorzugsweise die Steuerung (258) dazu konfiguriert ist, das kompensierte Dehnungssignal mit dem Abschaltdruckwert zu vergleichen und den Strom des unter Druck stehenden Gases zu dem aufblasbaren Schlauch zu starten, wenn das kompensierte Dehnungssignal anzeigt, dass der Druck innerhalb des aufblasbaren Schlauchs kleiner als der Abschaltdruckwert ist.

12. Evakuierungssystem nach Anspruch 10, wobei die Steuerung (258) dazu konfiguriert ist, das kompensierte Dehnungssignal mit einem Abschaltdehnungswert zu vergleichen und den Strom des unter Druck stehenden Gases zu dem aufblasbaren Schlauch zu stoppen, wenn das kompensierte Dehnungssignal den Abschaltdehnungswert überschreitet.

13. Verfahren zum Steuern des Aufblasens eines aufblasbaren Elements, umfassend:
Öffnen eines Ventilmoduls, das mit einer Quelle eines unter Druck stehenden Gases verbunden und dazu konfiguriert ist, einen Strom des unter Druck stehenden Gases zu dem aufblasbaren Element zu steuern;
Überwachen eines Dehnungssensors, der an dem aufblasbaren Element montiert ist, um Echtzeit-Dehnungsdaten einer elastischen Verformung des aufblasbaren Elements bereitzustellen;
Überwachen eines Temperatursensors, der an dem aufblasbaren Element montiert ist, um Echtzeit-Temperaturdaten des aufblasbaren Elements bereitzustellen;
Erzeugen eines kompensierten Dehnungssignals basierend auf einem Vergleich der Echtzeit-Dehnungsdaten und der Echtzeit-Temperaturdaten mit einer thermischen Kompensationsdatenbank; und
Aktivieren eines Bereitschaftsanzeigemoduls basierend darauf, dass das kompensierte Dehnungssignal einen Schwellenwert erreicht hat, der einen Einsatzzustand des aufblasbaren Elements anzeigt.

14. Verfahren nach Anspruch 13, wobei das Bereitschaftsanzeigemodul eine Lichtquelle oder eine Audioquelle aufweist.

## Revendications

1. Système de capteur de gonflage pour un objet gonflable, comprenant :
un module indicateur de préparation (270) ;
un capteur d'étirement (220) configuré pour être monté sur le gonflable et pour fournir des données d'étirement en temps réel d'une déformation élastique du gonflable ; et
un dispositif de commande (258) configuré pour recevoir les données d'étirement en temps réel et pour transmettre un signal de commande au module indicateur de préparation pour indiquer un état déployé du gonflable ; et **caractérisé par** :
un capteur de température (222) configuré pour être monté sur le gonflable et pour fournir des données de température en temps réel du gonflable.

2. Système de capteur de gonflage selon la revendication 1, dans lequel le dispositif de commande comporte une base de données de température d'étirement configurée pour compenser les données d'étirement en temps réel sur la base des données de température en temps réel et pour générer un signal d'étirement compensé.

3. Système de capteur de gonflage selon la revendication 2, dans lequel le dispositif de commande (258) est configuré pour comparer le signal d'étirement compensé à une valeur de pression de coupure et pour activer le module indicateur de préparation une fois que le signal d'étirement compensé indique qu'une pression à l'intérieur du gonflable dépasse la valeur de pression de coupure.

4. Système de capteur de gonflage selon la revendication 3, dans lequel le module indicateur de disponibilité (270) comporte une source lumineuse ou une source audio ; et/ou
dans lequel le dispositif de commande (258) est configuré pour comparer le signal d'étirement compensé à la valeur de pression de coupure et pour arrêter un flux d'un gaz sous pression vers le gonflable si le signal d'étirement compensé indique que la pression à l'intérieur du gonflable dépasse la valeur de pression de coupure ; et/ou
dans lequel le dispositif de commande (258) est configuré pour comparer le signal d'étirement compensé à une valeur d'étirement de coupure et pour arrêter un flux d'un gaz sous pression vers le gonflable si le signal d'étirement compensé dépasse la valeur d'étirement de coupure.

5. Système d'évacuation pour un aéronef, comprenant :
un tube gonflable (212) ;
une source d'un gaz sous pression ;
un module de vanne (252) connecté à la source du gaz sous pression et configuré pour commander un flux du gaz sous pression vers le tube gonflable ;
un système de capteur de gonflage selon la revendication 1 ;
dans lequel le dispositif de commande (258) est configuré pour transmettre un signal de commande au module de vanne pour commander le flux du gaz sous pression vers le tube gonflable.

6. Système d'évacuation selon la revendication 5, dans lequel le module indicateur de préparation (270) comporte une source lumineuse ou une source audio, et de préférence dans lequel le module indicateur de préparation peut être monté sur une porte de sortie de l'aéronef.

7. Système d'évacuation selon la revendication 6, dans lequel le dispositif de commande (258) comporte une base de données de température d'étirement configurée pour compenser les données d'étirement en temps réel sur la base des données de température en temps réel et pour générer un signal d'étirement compensé.

8. Système d'évacuation selon la revendication 7, dans lequel le dispositif de commande (258) est configuré pour comparer le signal d'étirement compensé à une valeur de pression de coupure et pour activer le module indicateur de préparation une fois que le signal d'étirement compensé indique qu'une pression à l'intérieur du tube gonflable dépasse la valeur de pression de coupure.

9. Système d'évacuation selon la revendication 7, dans lequel le module de vanne (252) comporte une vanne pneumatique principale configurée pour démarrer et arrêter le flux du gaz sous pression.

10. Système d'évacuation selon la revendication 9, dans lequel le module de vanne (252) comporte une vanne de commande normalement fermée connectée au dispositif de commande et configurée pour actionner la vanne pneumatique principale.

11. Système d'évacuation selon la revendication 10, dans lequel le dispositif de commande (258) est configuré pour comparer le signal d'étirement compensé à une valeur de pression de coupure et pour arrêter le flux du gaz sous pression vers le tube gonflable si le signal d'étirement compensé indique que la pression à l'intérieur du tube gonflable est supérieure à la valeur de pression de coupure, et de préférence dans lequel le dispositif de commande (258) est configuré pour comparer le signal d'étirement compensé à la valeur de pression de coupure et pour démarrer le flux du gaz sous pression vers le tube gonflable si le signal d'étirement compensé indique que la pression à l'intérieur du tube gonflable est inférieure à la valeur de pression de coupure.

12. Système d'évacuation selon la revendication 10, dans lequel le dispositif de commande (258) est configuré pour comparer le signal d'étirement compensé à une valeur d'étirement de coupure et pour arrêter le flux du gaz sous pression vers le tube gonflable si le signal d'étirement compensé dépasse la valeur d'étirement de coupure.

13. Procédé de commande du gonflage d'un objet gonflable, comprenant :
l'ouverture d'un module de vanne connecté à une source d'un gaz sous pression et configuré pour commander un flux du gaz sous pression vers le gonflable ;
la surveillance d'un capteur d'étirement monté sur le gonflable pour fournir des données d'étirement en temps réel d'une déformation élastique du gonflable ;
la surveillance d'un capteur de température monté sur le gonflable pour fournir des données de température en temps réel du gonflable ;
la génération d'un signal d'étirement compensé basé sur une comparaison des données d'étirement en temps réel et des données de température en temps réel avec une base de données de compensation thermique ; et
l'activation d'un module indicateur de préparation basé sur le signal d'étirement compensé présentant atteint une valeur seuil indiquant un état déployé du gonflable.

14. Procédé selon la revendication 13, dans lequel le module indicateur de préparation comporte une source lumineuse ou une source audio.
